# EUROPÄISCHE PATENTSCHRIFT

(11) **EP 2 639 414 B1**
(45) Veröffentlichungstag und Bekanntmachung des Hinweises auf die Patenterteilung: **06.05.2015**
(21) Anmeldenummer: 13158684.4
(22) Anmeldetag: 12.03.2013
(51) Int. Cl.: F01K 23/02, H01M 8/04, F22B 1/18, F22G 1/02

(54) **Kühlsystem für eine Brennstoffzelle und damit verbundene Dampfturbine**
Cooling system for a fuel cell and connected steam turbine
Système de refroidissement pour pile à combustible avec une turbine à vapeur

(30) Priorität: 14.03.2012 DE 102012005121
(43) Veröffentlichungstag der Anmeldung: 18.09.2013
(73) Patentinhaber: Vaillant GmbH, 42859 Remscheid (DE)
(72) Erfinder: Badenhop, Thomas, 51688 Wipperfürth (DE)
(74) Vertreter: Hocker, Thomas

(56) Entgegenhaltungen:
- EP-A1- 1 207 580
- WO-A2-2013/025256
- DE-C1- 19 608 738
- FR-A1- 2 301 103
- JP-A- H0 260 060
- JP-A- S6 134 863

## Beschreibung

Die Erfindung betrifft ein Kühlsystem für eine Brennstoffzelle sowie ein Brennstoffzellenanlage mit einem Kühlsystem.

Brennstoffzellen werden als Blockheizkraftwerke im häuslichen Umfeld eingesetzt. Dabei dienen Brennstoffzellen der Stromerzeugung zur eigenen Verwendung und zur entgeltlichen Einspeisung ins Netz. Die dabei anfallende Wärme wird für Heizzwecke verwendet. Eine derartige Brennstoffzelle mit Kraft-Wärme-Kopplung ist aus der Patentschrift DE 196 08 738 C1 bekannt.

Die Brennstoffzelle ist ein elektrochemischer Energiewandler. Sie besteht (ähnlich wie eine Batterie) aus zwei Elektroden (Anode und Kathode), die durch einen Elektrolyten räumlich voneinander getrennt sind. Der Elektrolyt ist undurchlässig für Gase, leitet aber Ionen. Der Anode wird Wasserstoff (H2), der Kathode Sauerstoff (02) zugeführt. Bei der Reaktion beider Gase entsteht zwischen den Elektroden eine Spannung, die in einem angeschlossenen Verbraucher einen Stromfluss hervorruft. Gleichzeitig entsteht Wärme, die ebenfalls genutzt werden kann (Kraft-Wärme- Kopplung). Als Reaktionsprodukt fällt Wasser an. Um technisch nutzbare Spannungen zu erhalten, werden je nach erforderlicher Leistung mehrere Zellen in Reihe geschaltet oder "gestapelt" (Stack). Durch das Zusammenfügen von mehreren Zellen (ca. 30 bis 500) zu einem Stack lassen sich technisch relevante Spannungen erzielen. Die einzelnen Zellen werden dabei durch Bipolarplatten voneinander getrennt. Metallische oder kohlenstoffhaltige Stromableiter stellen den elektrischen Kontakt zwischen Elektroden und Bipolarplatten her. Isolierende Endplatten halten den Stack über Zugstangen zusammen. Die anfallende Wärme wird über einen Kühlungskreislauf ausgekoppelt.

Mit zunehmender Stackgröße und mit steigender Wärmeproduktion zeigen sich die Grenzen der heute bei Hochtemperatur PEM Brennstoffzellen verwendeten Luftkühlung und der Flüssigkeitskühlung mit organischen Wärmeträgern. Bei größeren Leistungseinheiten im kW-Bereich ist es nur noch mit erheblichem Aufwand möglich die im Brennstoffzellen-Stapel entstehende Joulesche Wärme gleichmäßig abzuführen und eine isotherme Betriebstemperatur über alle Bipolarplatten des Stacks sicherzustellen. Die isotherme Temperatur über den Stack ist gerade bei Hochtemperatur PEM Brennstoffzellen wichtig. Schon Temperaturgradienten größer 5K führen zu deutlichen Leistungsverlusten und einer beschleunigten Degradation (Alterung) des Brennstoffzellenstapels.

Aufgrund der geringen Wärmekapazität der Luft wären bei großen abzuführenden Wärmemengen aus dem Brennstoffzellenstapel sehr große Luftmengen erforderlich. Dies wird dazu führen, dass der erforderliche Hilfsenergiebedarf für die Förderung der Kühlluft den Wirkungsgradvorteil der Brennstoffzelle teilweise oder vollständig aufbraucht. Daher ist die Luftkühlung bei Hochtemperatur PEM Brennstoffzellen auf den Einsatz in dem Bereich kleiner Leistungen (≤ 1 kW elektrische Anschlussleistung) beschränkt.

Die Hochtemperatur-PEM-Brennstoffzelle hat in den letzten Jahren eine große Entwicklung vollzogen und ist in vielen Anwendungen der Niedertemperatur-PEM-Brennstoffzelle überlegen. Insbesondere immer dann, wenn die zur Verfügung stehende Wärmesenke ein ähnliches Temperaturniveau annehmen kann, wie die Betriebstemperatur der Niedertemperatur-PEM-Brennstoffzelle. Dies ist in der Hausenergieversorgung immer dann der Fall, wenn mit der Brennstoffzellenanlage Warmwasser bereit gestellt werden soll.

Zudem ist es wichtig, die entstehende Wärme in der Brennstoffzelle gleichmäßig und zuverlässig abzuführen und eine isotherme Betriebstemperatur über alle Bipolarplatten des Stacks sicherzustellen. Die isotherme Temperatur über den Stack ist gerade bei Hochtemperatur PEM Brennstoffzellen wichtig. Schon Temperaturgradienten größer 5K führen zu deutlichen Leistungsverlusten und einer beschleunigten Degradation (Alterung) des Brennstoffzellenstapels.

In der Patentschrift DE 10 2006 047 493 B4 wird eine Anordnung zur Verdampfungskühlung beschrieben. In dem in dieser Schrift beschriebenen Prozess verdampft die Hochtemperatur-PEM-Brennstoffzelle Prozesswasser und versorgt so einen Dampfreformer mit erforderlichem Prozessdampf. Der Vorteil bei der Nutzung von Wasser für die Verdampfungskühlung ist die hohe Verdampfungsenthalpie von Wasser sowie dessen relativ hohe Verfügbarkeit. Problematisch bei der Verwendung von Wasser als Kühlmittel für die Verdampfungskühlung in Brennstoffzellen ist, dass die Verdampfungszone in der Brennstoffzelle gegen relativ hohe Dampfdrücke zu dimensionieren ist.

In der Patentanmeldung EP 1 207 580 A1 wird ein brenstoffzellenbetriebenes Kraftfahrzeug offenbart, bei dem das Kühlmittel der PEM-Brennstoffzelle eine Dampfturbine versorgt, die mechanische Aggregate des Kraftfahrzeugs oder des Kühlmittelkreislaufs antreibt.

Bei der Hochtemperatur PEM Brennstoffzelle, die mit einer Betriebstemperatur von 160°C bis 200°C arbeitet, treten Dampfdrücke von größer 7 bar auf. Der Brennstoffzellenstapel müsste gegen diese Dampfdrücke ausgelegt werden, was zu schweren und kostspieligen Aufbauten führt.

Es ist daher Aufgabe der Erfindung, bekannte gattungsgemäße Brennstoffzellenanlagen für den Einsatz in einem Blockheizkraftwerk so weiterzubilden, dass über die oben genanten Grenzen hinaus die elektrische Effizienz weiter gesteigert wird und zudem eine gleichmäßige und zuverlässige Wärmeabfuhr ohne die genannten Nachteile erfolgt und somit Beiträge zur Steigerung der Lebensdauer liefert.

Diese Aufgabe wird erfindungsgemäß dadurch gelöst, dass bei einer Brennstoffzellenanlage mit mindestens einem Kühlkanal und mit einer mit den Kühlkanälen im Kreislauf verbundenen Dampfturbine in den Kühlkanälen Polyether, vorzugsweise Polyglykole als Kühlmittel geführt wird und die Dampfturbine mit Polyether, vorzugsweise Polyglykolen betrieben wird. Da diese Fluide im Bereich der Betriebstemperatur der Brennstoffzellenanlage verdampfen, wird eine besonders vorteilhafte Kühlwirkung durch die Verdampfungswärme erreicht. Dadurch kann die in der Abwärme enthaltene Exergie genutzt werden.

In einer Weiterbildung der Erfindung wird die Dampfturbine direkt oder indirekt zum Antrieb von mindestens einem Aggregat der Brennstoffzellenanlage genutzt.

In einer bevorzugten Weiterbildung der Erfindung ist die Dampfturbine mit einem Stromgenerator verbunden, der Strom erzeugt. Der so erzeugte Strom wird in mindestens einem elektrischen Aggregat der Brennstoffzellenanlage genutzt.

In einer alternativen bevorzugten Weiterbildung ist die Dampfturbine mechanisch mit mindestens einem Antrieb eines Aggregats der Brennstoffzellenanlage verbunden.

In einer vorteilhaften Weiterbildung umfasst die Brennstoffzellenanlage einen Kondensator zur Kondensation des Kühlmittels. Dieser Kondensator ist in Umlaufrichtung des Kühlmittels hinter der Turbine angeordnet in einer Weise, die die Abwärme des Kondensators für Heizzwecke nutzbar macht.

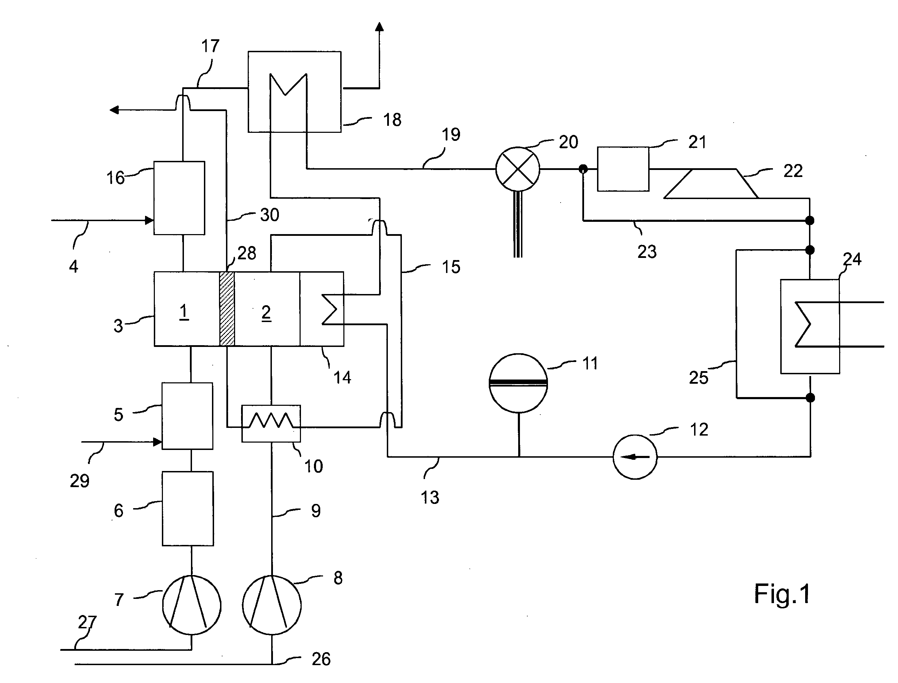

Die Erfindung wird nun anhand der Figur 1 detailliert erläutert. Die Figur 1 stellt ein Brennstoffzellensystem mit Verdampfungskühlung der Brennstoffzelle dar, deren Abdampf anschließend in einer Turbine entspannt wird.

Brennstoffzellen werden mit Wasserstoff betrieben. Er kommt jedoch in der Natur nur in gebundener Form vor und muss erst durch spezielle Verfahren erzeugt werden (Brenngasaufbereitung). Die Wasserstoffgewinnung mit Hilfe von regenerativen Energien ist derzeit noch eine Zukunftsoption. Deshalb werden auf absehbare Zeit kohlenwasserstoffreiche Gase als Wasserstofflieferant für Brennstoffzellen dienen. Besonders gute Voraussetzungen bietet dabei Erdgas.

Einer Hochtemperatur-PEMFC (3) oder PAFC Brennstoffzelle (3) wird anodenseitig (1) ein wasserstoffreiches Gas zugeführt. Dieses wasserstoffreiche Gas wird in einer Reformereinheit (5) bereitgestellt. Die Reformereinheit umfasst wenigstens einen Reformer zur Reformierung eines Kohlenwasserstoffes in ein wasserstoffreiches Gas und wenigstens eine Konvertierungsstufe zur Umsetzung von Kohlenmonoxid mit Wasser zu Kohlendioxid und Wasserstoff (Wassergas-Shiftreaktion). Dazu kann es erforderlich sein, dass der Konvertierungsstufe Prozesswasser zu zuführen ist. Dies in der Figur 1 nicht dargestellt. Die Reformereinheit kann um eine Gasfeinreinigungsstufe erweitert werden, um die Kohlenmonoxidgehalte hinter der Konvertierungsstufe weiter abzusenken.

Der Reformer der Reformereinheit (5) kann ein Dampfreformer, ein autothermer Dampfreformer oder eine katalytische oder thermische partielle Oxidationsstufe sein.

Die Gasfeinreinigungsstufe der Reformereinheit (5) kann eine selektive Oxidationsstufe, eine Methanisierungsstufe, eine Membrantrennstufe oder eine Adsorption sein.

Die Reformereinheit (5) wird über die Versorgungsleitung (29) mit Luft, Wasserdampf und/oder Luft-Wasserdampfgemischen versorgt.

Die Reformereinheit (5) wird mit schwefelfreien Brennstoff von der Entschwefelungsstufe (6) versorgt. Viele kohlenwasserstoffhaltige Brennstoffe enthalten schwefelhaltige Begleitstoffe, wie z.B. Erdgas. Schwefelverbindungen schädigen Elektrokatalysatoren und führen u.a. zu Leistungseinbußen bei der Brennstoffzelle. U.a. aus diesem Grund ist der Brennstoff, welcher über die Leitung (27) einer Brennstofffördereinrichtung (7) zugeführt, zu entschwefeln.

Damit es während des Betriebes der Brennstoffzelle (3) nicht zu einem Zusammenbrechen der Klemmspannung kommt wird die Anode (1) mit mehr wasserstoffreichen Gas versorgt als für die eigentliche Stromproduktion erforderlich wäre. Der nicht umgesetzte Wasserstoff wird von der Anode (1) in den Nachbrenner (16) geleitet und dort mit Luftsauerstoff, der durch die Versorgungsleitung (4) dem Nachbrenner (16) zugeführt wird, total oxidiert. Auch die Kathodenabluft der Kathode (2) der Brennstoffzelle (3) kann als Sauerstofflieferant dienen. Denn genau wie bei der Anode (1) ist der Kathode (2) Sauerstoff im Überschuss zu zuführen, um ein Absinken oder gar Einbrechen der Klemmspannung zu vermeiden.

Der Nachbrenner (16) ist vorzugsweise ein katalytischer Nachbrenner. Jedoch kann der Nachbrenner (16) auch ein Diffusionsbrenner, ein Rekuperatorbrenner, ein teil- und vollvormischender Brenner oder ein Porembrenner sein.

Die oben genannten Brenner können sowohl teilkatalytisch ausgeführt sein, als auch eine katalytische Reinigungsstufe nachgeschaltet haben.

Der Nachbrenner (16) ist mit der Abgasleitung (17) mit dem Abgaswärmeübertrager (18) verbunden. Die im Abgas enthaltene Wärme wird teilweise oder vollständig auf das bereits verdampfte Kühlmittel des Kühlkreislaufes der Brennstoffzelle (3) übertragen. Dadurch wird der Dampf weiter überhitzt. Dem Abgaswärmeübertrager (18) können abgasseitig weitere Wärmeübertrager nachgeschaltet sein, um die Energieeffizienz der Gesamtanlage zu steigern. Insbesondere das Nachschalten eines Kondensationsabgaswärmeübertragers, einem sogenannten Ecomizer, kann sinnvoll sein, um im Abgas noch enthaltene Kondensationswärme zu gewinnen. Dies ist aber in der Figur 1 nicht dargestellt.

Das Gebläse (8) wird über die Versorgungsleitung (26) mit Luftsauerstoff versorgt. Das Gebläse (8) erhöht den Druck des Luftsauerstoffes soweit, dass die Druckverluste im Brennstoffzellensystem überwunden werden können. Die Kathode (2) der Brennstoffzelle (3) ist über die Versorgungsleitung (9) mit dem Luftgebläse (8) verbunden. Die einströmende Luft wird mit der Kathodenluft im Wärmeübertrager (10) vorgewärmt. Die Kathodenabluft wird schließlich aus dem System abgeführt, wobei es sinnvoll sein kann, hinter dem Wärmeübertrager (10) weitere Wärmeübertrager anzuordnen, um die Energieeffizienz zu steigern. Insbesondere das Nachschalten eines Kondensationsabgaswärmeübertragers, einem sogenannten Ecomizer, kann sinnvoll sein, um der Kathodenluft das noch enthaltene Produktwasser zu entziehen und die darin enthaltene Kondensationswärme zu gewinnen. Dies ist aber in der Figur 1 nicht dargestellt.

In die Brennstoffzelle (3) ist ein Wärmeübertrager in Form eines Kühlkanals (14) integriert. Die entstehende Reaktionswärme durch die elektrochemische Reaktion (Joul'sche Wärme) wird hier auf das Kühlmittel übertragen, wodurch dieses erfindungsgemäß teilweise oder vollständig verdampft wird. Zur Regelung des Verdampfungsprozesses im Kühlkanal (14) kann in der Dampfleitung stromabwärts des Kühlkanals (14) der Brennstoffzelle (3) ein Temperatur- und oder oder Drucksensor angeordnet sein. Entsprechend der Signale dieser Sensoren fördert die Kühlmittelpumpe (12) über die Versorgungsleitung (13) mehr oder weniger Kühlmittel in den Kühlkanal (14) der Brennstoffzelle (3). Dadurch kann sichergestellt werden, dass immer ausreichend Kühlmittel im Kühlkanal (14) ist und sich so isotherme Betriebsbedingungen in der Brennstoffzelle (3) einstellen.

Der in der Brennstoffzelle (3) erzeugte Dampf wird dem Abgaswärmeübertrager (18) zugeführt und dort überhitzt bzw. noch nicht verdampftes Kühlmittel wird hier verdampft. So wird sichergestellt, dass sich der Turbinenzuleitung (19) nur noch Dampf befindet. Dieser kann durch den Nacherhitzer (20) im Betrieb weiter überhitzt werden, wodurch der Druck in der Versorgungsleitung (19) weiter ansteigt. Der überhitzte Dampf wird der Dampftrommel (21) zugeführt. In der Dampftrommel (21) ist ein Tropfenabscheider integriert, um letzte Flüssigkeitsreste aus dem Dampfstrom zu entfernen, bevor dieser der Turbine (22) zugeführt wird. Der Tropfenabscheider ist deshalb notwendig, um die Turbine (22) vor mitgerissenen Flüssigkeitstropfen zu schützen, die die Turbine (22) beschädigen könnten.

Der Dampf wird in der Turbine (22) entspannt. Die dabei entstehende mechanische Arbeit kann einerseits dazu genutzt werden, die Gebläse (7) und (8) direkt anzutreiben; beispielsweise können diese über ein Getriebe miteinander verbunden sein. Anderseits kann die mechanische Energie in elektrische Energie gewandelt werden. Auf jeden Fall wird der elektrische Wirkungsgrad über den eines Brennstoffzellensystems mit Verdampfungskühlung ohne nachgeschaltete Turbine liegen. Der Abdampf der Turbine (22) wird dem Kondensator (24) zugeführt, wobei das Kühlmittel vollständig kondensiert wird. Der Kondensator wird beim Einsatz als Mikro-Kraft-Wärmeanlage in der Hausenergieversorgung mit dem Heizungswasser gekühlt. Die dem Abdampf entzogene sensitive und latente Wärme kann so zur Beheizung des Gebäudes oder zur Erwärmung von Warmwasser bzw. Brauchwasser genutzt werden.

Das verflüssigte Kühlmittel wird von der Kühlmittelpumpe (12) angesaugt und über die Leitung (13) zur Brennstoffzelle (3) gepumpt. Der Ausgleichbehälter (11) dient zum einen als Kühlmittelreservoir zum anderen sorgt dieser dafür, dass der Vordruck mit dem das Kühlmittel in den Kühlkanal (14) der Brennstoffzelle (3) gepumpt wird, nicht den zulässigen Kühlmitteldruck überschreitet.

Das erfindungsgemäß verwendete Kühlmittel gehört bevorzugt zur Stoffklasse der Polyether. Die Stoffklasse der Polyether sind langkettige Verbindungen der Art ...-R1-O-R2-O-R3-... und weisen nicht die Nachteile klassischer Lösungsmittel in der Verdampfungskühlung auf, wie z.B. human-toxische, kanzerogene oder wasser- sowie umweltgefährdende Eigenschaften. Beispiele für Polyether (auch Polyalkylenglycole, Polyetherpolyole, Polyalkylenoxide) sind Polyethylenglykol und Polypropylenglykol, die beide durch katalytische Polymerisation der entsprechenden Epoxide (Oxirane) Ethylenoxid bzw. Propylenoxid hergestellt werden. In Fall von Polyethylenglykol und Polypropylenglykol sind alle Reste (R1, R2, R3...) mit Ausnahme der Endglieder der Ketten identisch. Bei der Umsetzung von Epoxiden mit Diolen können verschiedenste Polymere hergestellt werden. Die Zugabe eines einfachen Alkanols stoppt die Polymerisierung. Auch Epoxidharze sind Polyether mit endständigen Epoxidgruppen. Polyetherdiole, wie z.B. Polyethylenglycol, sind wichtige Vorprodukte bei der Reaktion mit Isocyanaten zu Polyurethanen.

Insbesondere die Verwendung von Polypropylenglykol ist als Verdampfungskühlmittel in Hochtemperatur-PEMFC oder PAFC Brennstoffzellensystem aufgrund seiner physikalischen und thermo-chemischen Eigenschaften besonders interessant.

### Bezugszeichenliste

- 1: Anode
- 2: Kathode
- 3: Brennstoffzelle
- 4: Verbrennungsluft Nachbrenner
- 5: Reformereinheit
- 6: Entschwefelung
- 7: Brennstoff-Fördereinrichtung (Gasgebläse)
- 8: Kathodeluft-Fördereinrichtung (Kathodenluftgebläse)
- 9: Kathodenluftzuleitung
- 10: Kathodenluftvorwärmer
- 11: Kühlmittel-Ausdehungsgefäß
- 12: Kühlmittelpumpe
- 13: Kühlmittelleitung
- 14: Kühlkanal
- 15: Kathodenabluftleitung
- 16: Nachbrenner
- 17: Abgasleitung
- 18: Abgaswärmeübertrager
- 19: Kühlmitteldampfleitung
- 20: Startbrenner und Nacherhitzer
- 21: Dampftrommel mit Tropfenabscheider
- 22: Dampfturbine
- 23: Kühlmittel-Bypass-Leitung 1
- 24: Kondensator
- 25: Kühlmittel-Bypass-Leitung 2
- 26: Kathodenluftzuleitung
- 27: Brennstoffzuleitung
- 28: MEA / Elektrolyt-Membran-Einheit
- 29: Reformerluft oder Prozessdampf oder Luft/Dampfgemische
- 30: Kathodenabluft

## Patentansprüche

1. Brennstoffzellenanlage mit mindestens einem Kühlkanal (14), wobei die Kühlkanäle (14) mit einer Dampfturbine (22) im Kreislauf verbunden sind, **dadurch gekennzeichnet, dass** in den Kühlkanälen (14) Polyether als Kühlmittel geführt wird und die Komponenten der Brennstoffzellenanlage so konfiguriert sind, dass die Dampfturbine (22) mit Polyether betreibbar ist.

2. Brennstoffzellenanlage nach Anspruch 1, **dadurch gekennzeichnet, dass** die Dampfturbine (22) direkt oder indirekt zum Antrieb von mindestens einem Aggregat der Brennstoffzellenanlage dient.

3. Brennstoffzellenanlage nach Anspruch 2, **dadurch gekennzeichnet, dass** die Dampfturbine (22) mit einem Stromgenerator verbunden ist und dieser mit mindestens einem elektrischen Aggregat der Brennstoffzellenanlage verbunden ist.

4. Brennstoffzellenanlage nach Anspruch 2, **dadurch gekennzeichnet, dass** die Dampfturbine (22) mechanisch mit mindestens einem Antrieb eines Aggregats der Brennstoffzellenanlage verbunden ist.

5. Brennstoffzellenanlage nach einem der vorhergehenden Ansprüche, **dadurch gekennzeichnet, dass** die Brennstoffzellenanlage einen Kondensator (24) zur Kondensation des Kühlmittels umfasst, der in der Form hinter der Dampfturbine (22) angeordnet ist, dass die Abwärme des Kondensators (24) für Heizzwecke nutzbar ist.

6. Brennstoffzellenanlage nach einem der Ansprüche 1 bis 5, **dadurch gekennzeichnet, dass** der Polyether ein Polyalkylenglykol ist.

7. Brennstoffzellenanlage nach Anspruch 6, **dadurch gekennzeichnet, dass** der Polyalkylenglykol ein Polypropylenglykol ist.

8. Brennstoffzellenanlage nach Anspruch 6, **dadurch gekennzeichnet, dass** der Polyalkylenglykol ein Polyethylenglykol ist.

9. Brennstoffzellenanlage nach einem der Ansprüche 1 bis 5, **dadurch gekennzeichnet, dass** der Polyether ein Polyethylenglykoldimethylether ist.

## Claims

1. Fuel cell system having at least one cooling channel (14), wherein the cooling channels (14) are connected to a steam turbine (22) in the circuit, **characterised in that** polyether is guided into the cooling channels (14) as coolant and the components of the fuel cell system are configured such that the steam turbine (22) is able to be operated with polyether.

2. Fuel cell system according to claim 1, **characterised in that** the steam turbine (22) serves directly or indirectly to drive at least one unit of the fuel cell system.

3. Fuel cell system according to claim 2, **characterised in that** the steam turbine (22) is connected to an electricity generator and this is connected to at least one electrical unit of the fuel cell system.

4. Fuel cell system according to claim 2, **characterised in that** the steam turbine (22) is connected mechanically to at least one drive of a unit of the fuel cell system.

5. Fuel cell system according to one of the preceding claims, **characterised in that** the fuel cell system comprises a condenser (24) to condense the coolant, which is arranged behind the steam turbine (22), in such a way that the waste heat of the condenser (24) is able to be used for heating purposes.

6. Fuel cell system according to one of claims 1 to 5, **characterised in that** the polyether is a polyalkylene glycol.

7. Fuel cell system according to claim 6, **characterised in that** the polyalkylene glycol is a polypropylene glycol.

8. Fuel cell system according to claim 6, **characterised in that** the polyalkylene glycol is a polyethylene glycol.

9. Fuel cell system according to one of claims 1 to 5, **characterised in that** the polyether is a polyethylene glycol dimethyl ether.

## Revendications

1. Dispositif à cellules de combustible avec au moins un canal de refroidissement (14), les canaux de refroidissement (14) étant reliés au circuit par une turbine à vapeur (22), **caractérisé en ce que** du polyéther est utilisé comme moyen de refroidissement dans ces canaux de refroidissement (14) et **en ce que** les composants du dispositif à cellules de combustible sont configurés de sorte que la turbine à vapeur (22) peut être actionnée par le polyéther.

2. Dispositif à cellules de combustible selon la revendication 1, **caractérisé en ce que** la turbine à vapeur (22) sert de manière directe ou indirecte à faire fonctionner au moins un agrégat du dispositif à cellules de combustible.

3. Dispositif à cellules de combustible selon la revendication 2, **caractérisé en ce que** la turbine à vapeur (22) est reliée à un générateur de courant et **en ce que** ce dernier est relié à au moins un agrégat électrique du dispositif à cellules de combustible.

4. Dispositif à cellules de combustible selon la revendication 2, **caractérisé en ce que** la turbine à vapeur (22) est reliée mécaniquement à au moins un entraînement d'un agrégat du dispositif à cellules de combustible.

5. Dispositif à cellules de combustible selon l'une quelconque des revendications précédentes, **caractérisé en ce que** le dispositif à cellules de combustible comprend un condensateur (24) permettant la condensation du moyen de refroidissement, disposé derrière la turbine à vapeur (22), de sorte que la chaleur dissipée du condensateur (24) peut être utilisée pour chauffer.

6. Dispositif à cellules de combustible selon l'une quelconque des revendications 1 à 5, **caractérisé en ce que** le polyéther est un polyalkylène glycol.

7. Dispositif à cellules de combustible selon la revendication 6, **caractérisé en ce que** le polyalkylène glycol est un polypropylène glycol.

8. Dispositif à cellules de combustible selon la revendication 6, **caractérisé en ce que** le polyalkylène glycol est un polyéthylène glycol.

9. Dispositif à cellules de combustible selon l'une quelconque des revendications 1 à 5, **caractérisé en ce que** le polyéther est un éther diméthylique de polyéthylène glycol.
